Europäisches Patentamt

European Patent Office

Office européen des brevets

(19)

(11) Numéro de publication: **0 125 977**

**A1**

(12) **DEMANDE DE BREVET EUROPEEN**

(21) Numéro de dépôt: **84400896.1**

(22) Date de dépôt: **03.05.84**

(51) Int. Cl.³: **F 16 H 3/60**

(30) Priorité: **06.05.83 FR 8307651**

(43) Date de publication de la demande:
**21.11.84 Bulletin 84/47**

(84) Etats contractants désignés:
**BE DE GB IT NL SE**

(71) Demandeur: **REGIE NATIONALE DES USINES RENAULT**
**Boîte postale 103 8-10 avenue Emile Zola**
**F-92109 Boulogne-Billancourt(FR)**

(72) Inventeur: **Houley, Daniel**
**49, rue d'Estienne d'Orves**
**F-92700 Colombes(FR)**

(72) Inventeur: **Baudoin, Patrice**
**3, allée des Carrougeaux**
**F-78620 L'Etang la Ville(FR)**

(74) Mandataire: **Chassagnon, Jean-Alain et al,**
**REGIE NATIONALE DES USINES RENAULT (S.0804)**
**F-92109 Boulogne-Billancourt Cedex(FR)**

(54) Dispositif automatisable de démarrage en marche avant et en marche arrière.

(57) Dispositif automatisable de démarrage en marche avant et en marche arrière, notamment pour véhicule automobile à moteur thermique, caractérisé en ce qu'il comporte un train épicycloîdal simple à trois satellites associé à un embrayage et à un frein afin de donner des dissipations d'énergie réduites lors des démarrages en marche arrière.

FIG.1

Croydon Printing Company Ltd.

DISPOSITIF AUTOMATISABLE DE DEMARRAGE EN MARCHE AVANT ET EN
MARCHE ARRIERE.

La présente invention se rapporte à un dispositif automatisable
de démarrage en marche avant et en marche arrière.

De nombreux dispositifs de démarrage en marche avant et en marche
arrière existent pour les véhicules automobiles à moteur thermique, parmi lesquels on peut citer :

- d'une part, les embrayages secs ou humides, monodisque ou multidisques, à commande manuelle ou automatique, celle-ci pouvant
être par exemple du type centrifuge à masselottes, les coupleurs
les convertisseurs, en association avec des dispositifs inverseurs ;

- d'autre part, les associations train épicycloïdal à six satellites - embrayage - frein.

Tous ces dispositifs présentent des inconvénients soit en prix de
revient, soit en consommation d'énergie, soit en encombrement et
en poids, soit en agrément d'utilisation.

Le but de la présente invention est de réaliser un dispositif
automatisable de démarrage en marche avant et en marche arrière,
notamment pour véhicule automobile à moteur thermique, associant
un train épicycloïdal simple à trois satellites, un embrayage et
un frein, afin de donner des dissipations d'énergie réduites
lors des démarrages en marche arrière.

A cet effet l'invention a pour objet un dispositif automatisable
qui comporte d'une part un train épicycloïdal simple, et d'autre
part un frein et un embrayage consistant l'un et l'autre en un
seul disque avec deux garnitures de friction, lesdits embrayage
et frein étant solidaires en rotation de l'un des flasques du

- 2 -

**0125977**

porte-satellites. Le dispositif selon l'invention comporte de plus des ressorts qui sont interposés entre les plateaux et contre-plateaux de l'embrayage et du frein.

Selon un mode de réalisation de l'invention, le flasque du porte-satellites, qui porte les disques de l'embrayage et du frein, est une cloche en tôle emboutie et découpée, qui par des encoches situées sur sa périphérie assure une liaison en rotation avec lesdits disques. Le vérin de l'embrayage est solidaire en rotation de l'arbre d'entrée. Le disque de l'embrayage et le disque du frein font un seul et même disque.

La cloche, qui porte le disque unique, comporte un déformé annulaire faisant office de collecteur d'huile lors de la rotation, qui coopère avec des orifices radiaux amenant l'huile vers les garnitures de friction portée par ledit disque.

Les vérins de l'embrayage et du frein sont situés de part et d'autre du plan du disque portant les garnitures de friction, dans un sens opposé par rapport à la direction axiale, de telle manière que les contre-plateaux des pistons du frein et de l'embrayage soient positionnés axialement par construction, pour centrer le disque au milieu des plateaux de l'élément non serré.

Selon un mode de réalisation de l'invention, le vérin de l'embrayage est solidaire en rotation de l'arbre de sortie. Le flasque du porte-satellites qui porte les disques de l'embrayage et du frein est une cloche en tôle emboutie et découpée, qui par des encoches situées sur sa périphérie, assure une liaison en rotation avec lesdits disques.

Les disques de l'embrayage et le disque du frein font un seul et même disque. Les vérins de l'embrayage et du frein sont situés dans un sens opposé par rapport à la direction axiale, de telle manière que les contre-plateaux des pistons du frein et de l'embrayage soient positionnés axialement par construction, pour centrer le disque au milieu des plateaux de l'élément non serré.

Selon un mode de réalisation de l'invention, le vérin de l'embrayage est solidaire en rotation de l'arbre de sortie. Le flasque du porte-satellites, qui porte les disques de l'embrayage et du frein, est une cloche en tôle emboutie et découpée qui par des encoches situées sur sa périphérie assure une liaison en rotation avec lesdits disques.

Le disque du frein est dissocié du disque de l'embrayage et situé à l'intérieur de la cloche. Les plateaux du frein sont portés par un moyeu faisant partie intégrante du carter, ledit moyeu comportant un roulement à aiguilles portant l'arbre d'entrée.

Selon un mode de réalisation de l'invention, le vérin de l'embrayage est solidaire en rotation de l'arbre de sortie. Le disque du frein est dissocié du disque de l'embrayage. Le flasque du porte-satellites, qui porte les disques de l'embrayage et du frein, est une cloche en tôle emboutie et découpée qui par des encoches situées sur sa périphérie assure une liaison en rotation avec lesdits disques. Les vérins de l'embrayage et du frein sont situés du même côté des plans des disques dans le même sens par rapport à la direction axiale.

Un tel dispositif suivant l'invention présente les avantages ci-après.

- Le mouvement entre par le planétaire du train épicycloïdal et sort par sa couronne.

La marche avant est obtenue en solidarisant par un embrayage deux quelconques des trois éléments du train, par exemple le porte-satellites et le planétaire ou le porte-satellites et la couronne.

Le rapport de transmission du dispositif, défini comme étant le rapport vitesse de sortie sur vitesse d'entrée vaut alors + 1.

La marche arrière est obtenue en immobilisant le porte-satellites par rapport au carter, par l'intermédiaire d'un frein. Le rapport de transmission est alors communément compris entre - 0,4 et - 0,8.

Des conditions de démarrage étant imposées, les énergies dissipées dans le cas d'un démarrage en marche arrière seront de ce fait beaucoup plus faibles que dans le cas d'un démarrage en marche avant.

Même si le couple moteur est limité, de sorte que le couple aux roues soit le même que celui qu'on obtiendrait en marche avant, dans le cas d'un démarrage en marche arrière, l'énergie dissipée ne sera respectivement et pour les valeurs externes précédentes, que 16 et 64 % de celle dissipée en marche avant.

Les surfaces des garnitures de friction étant le plus souvent déterminées par les énergies à dissiper, l'énergie spécifique étant donnée, on comprend le sous-dimensionnement de la ou des garnitures du frein qui résulte de l'utilisation d'un train simple à trois satellites.

On obtient ainsi un dispositif selon l'invention qui est compacte avec une traînée faible et un prix de revient réduit.

D'autres caractéristiques et avantages de la présente invention ressortiront de la description qui suit de modes de réalisation donnés à titre d'exemple, en référence aux dessins annexés sur lesquels :

- la figure 1 représente en coupe longitudinale une demi-vue du dispositif de l'invention selon un premier mode de réalisation ;

- la figure 2 représente en coupe longitudinale une demi-vue du dispositif de l'invention selon un second mode de réalisation ;

- la figure 3 représente en coupe longitudinale une demi-vue du dispositif de l'invention selon un quatrième mode de réalisation.

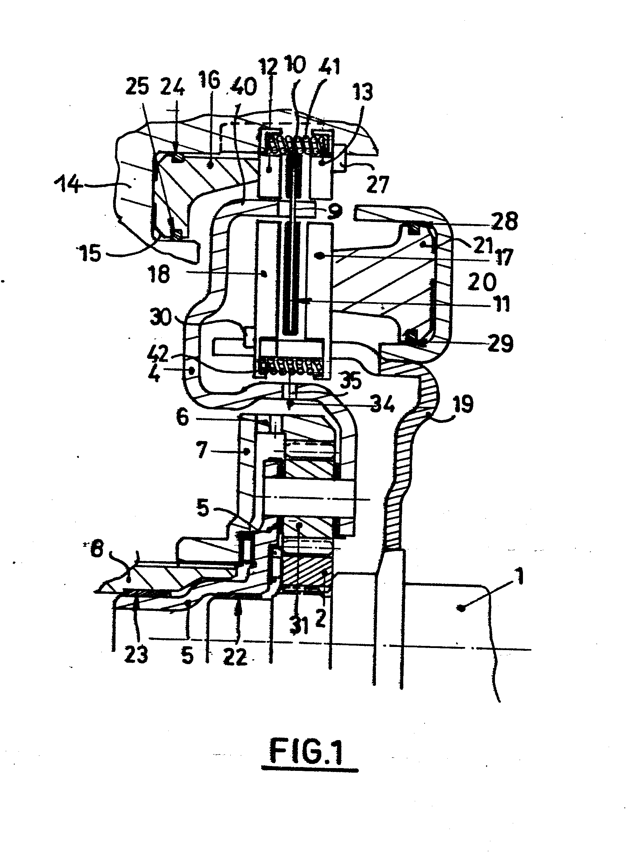

Dans un premier mode de réalisation de l'invention représenté sur la figure 1, un moteur non représenté entraîne l'arbre 1 qui est l'arbre d'entrée du dispositif objet de l'invention. Un amortisseur non représenté peut être interposé entre le moteur et cet arbre. L'arbre 1 entraîne en rotation un planétaire 2. Celui-ci engrène avec des satellites, préférentiellement au nombre de trois repères 31, 32 et 33. Le porte-satellites est constitué par deux flasques 4 et 5.

Une couronne 6 complète le train épicycloïdal. Elle est attachée au flasque 7 qui entraîne en rotation l'arbre 8 de sortie du dispositif. Dans ce premier mode de réalisation de l'invention, le flasque 4 du porte-satellites qui peut être réalisé en tôle emboutie est en forme de double cloche et porte un disque unique 9 s'étendant radialement de part et d'autre d'une paroi extérieure 40. A ce disque sont attachées deux garnitures de friction 10 et 11 respectivement du frein et de l'embrayage.

Chacune de ces garnitures 10 et 11 sera avantageusement choisie double ou biface.

La garniture 10 biface du frein coopère avec un plateau 12 et un contre-plateau 13 immobilisés en rotation par des liaisons adéquates au carter 14.

Un vérin hydraulique constitué par une chambre annulaire 15 dans ce carter et un piston annulaire 16 complète le dispositif, ainsi que des joints 24 et 25 et l'anneau 27 d'arrêt du contre-plateau 13.

La garniture 11 biface de l'embrayage coopère avec un plateau 17 et un contre-plateau 18 qui sont portés par une cloche 19 solidaire de l'arbre 1.

Cette cloche assure l'entraînement en rotation des plateaux 17 et 18. Elle peut être réalisée en tôle emboutie et soudée sur l'arbre 1. Elle porte aussi un vérin hydraulique constitué par une chambre annulaire 20 et un piston annulaire 21. Le dispositif est complété par les joints 28 et 29 et un anneau d'arrêt 30.

De par sa forme, le flasque 4 du porte-satellites permet de positionner le train épicycloïdal au centre du disque 9, ce qui permet de réduire l'encombrement axial du dispositif. Ce flasque 4 comporte aussi un déformé annulaire 34 percé d'orifices radiaux 35, qui jouent le rôle de collecteur d'huile et permettent la lubrification et le refroidissement des garnitures 10 et 11.

Les vérins du frein et de l'embrayage sont situés de part et d'autre du plan du disque 9. Ainsi, et dans la mesure où les contre-plateaux 13 et 18 sont judicieusement positionnés axialement, le disque 9 se trouve centré par construction entre les plateaux de l'élément non serré (lorsque l'autre est serré). Ceci permet une réduction des traînées parasites.

Des éléments d'écartement, par exemple des ressorts 41 et 42, peuvent être incorporés au dispositif pour assurer l'écartement des plateaux 12 et 13 d'une part, 17 et 18 d'autre part, en l'absence de pression de commande dans les chambres 15 et 20.

Le positionnement du porte-satellites est assuré par les bagues 22 et éventuellement 23 placées respectivement sur l'arbre 1 et dans l'arbre 8.

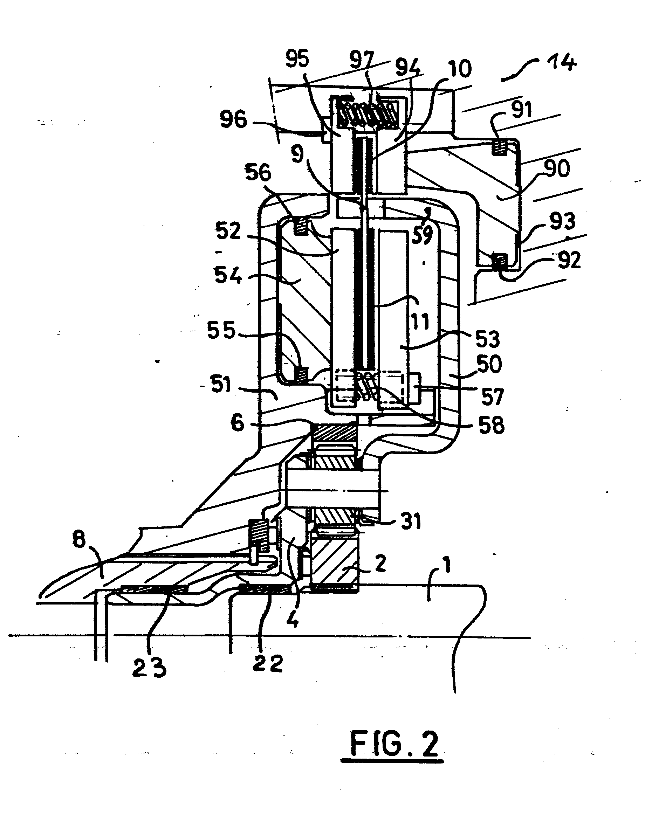

Dans un deuxième mode de réalisation de l'invention représenté sur la figure 2, un moteur non représenté entraîne l'arbre 1 qui est l'arbre d'entrée du dispositif objet de l'invention. Un amortisseur non représenté peut être interposé entre le moteur et cet arbre. L'arbre 1 entraîne en rotation un planétaire 2. Celui-ci engrène avec des satellites, préférentiellement au nombre de trois repères 31, 32 et 33. Le porte-satellites est constitué par deux flasques 4 et 50. Une couronne 6 complète le train épicycloïdal. Elle est attachée à une cloche 51 qui entraîne en rotation l'arbre 8 de sortie du dispositif.

Le flasque 50 du porte-satellites qui peut être réalisé en tôle emboutie est en forme de cloche, et porte un disque unique 9 s'étendant radialement de part et d'autre d'une paroi extérieure 59.

A ce disque sont attachées deux garnitures de friction 10 et 11 respectivement du frein et de l'embrayage. Chacune de ces garnitures 10 et 11 sera avantageusement choisie double ou biface. La garniture 10 biface du frein coopère avec un plateau 94 et un contre-plateau 95 immobilisés en rotation par des liaisons adéquates au carter 14. Un vérin hydraulique constitué par une chambre annulaire 93 dans ce carter et un piston annulaire 90 complète le dispositif ainsi que des joints 91 et 92. L'anneau 96 d'arrêt du contre-plateau 95 et les ressorts d'écartement 97 complètent le frein.

Dans ce deuxième mode de réalisation de l'invention (dessin n° 2), le vérin de l'embrayage est solidaire en rotation de l'arbre 8.

Il en résulte que, en l'absence d'une pression de commande dans le vérin de l'embrayage ou dans le vérin du frein, qui lui, de toutes façons, ne tourne pas, le moteur peut faire tourner l'arbre 1 à des vitesses élevées sans qu'il y ait mise en rotation de l'arbre 8.

Dans le premier mode de réalisation, ce n'était pas le cas : une pression dynamique centrifuge pouvait apparaître dans le vérin d'embrayage en l'absence de cette pression de commande.

Dans ce deuxième mode de réalisation, le flasque 50 du porte-satellites est simplifié. Par contre, la cloche 51 peut être obtenue en fonderie d'aluminium, dans laquelle est fixée la couronne 6, et ladite cloche 51 entraîne toujours l'arbre 8. Cette cloche 51 porte et entraîne en rotation le plateau 52 et le contre-plateau 53 de l'embrayage. Cette cloche 51 porte aussi le piston annulaire 54.

Les joints 55, 56, l'anneau d'arrêt 57 et les ressorts d'écartement 58 complètent l'embrayage.

Les vérins du frein et de l'embrayage sont situés de part et d'autre du plan du disque 9. Ainsi, et dans la mesure où les contre-plateaux 53 et 95 sont judicieusement positionnés axialement, le disque 9 se trouve centré par construction entre les plateaux de l'élément non serré (lorsque l'autre est serré). Ceci permet une réduction des traînées parasites.

Le positionnement du porte-satellites est assuré par des bagues 22 et éventuellement 23 placées respectivement sur l'arbre 1 et dans l'arbre 8.

Dans un troisième mode de réalisation de l'invention, les deux garnitures de friction du frein et de l'embrayage ne sont plus portés par un disque unique, mais par deux disques. L'avantage revendiqué disparaît mais on peut si nécessaire positionner les deux vérins du même côté de leurs disques respectifs.

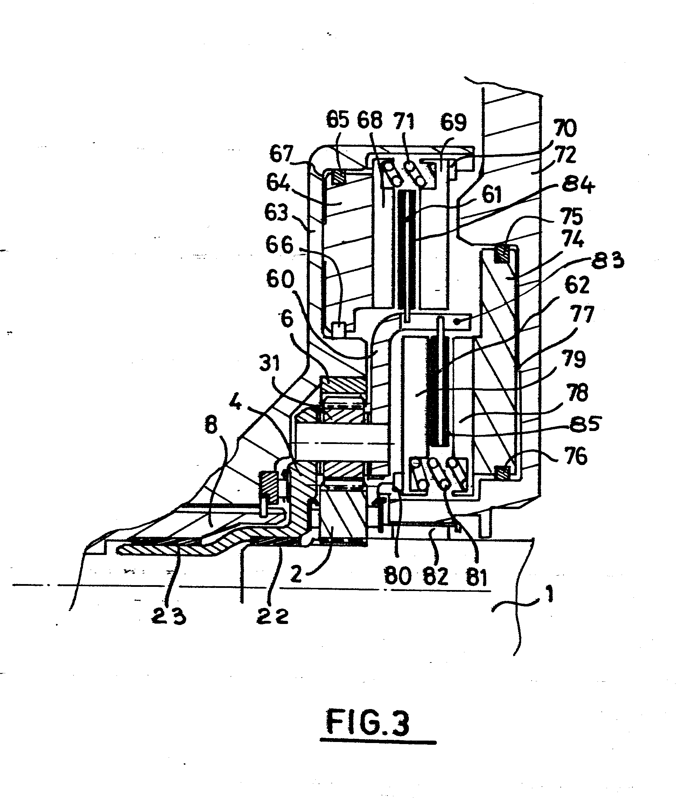

Dans un quatrième mode de réalisation de l'invention représenté sur la figure 3, un moteur non représenté entraîne l'arbre 1 qui est l'arbre d'entrée du dispositif objet de l'invention.

Un amortisseur non représenté peut être interposé entre le moteur et cet arbre.

L'arbre 1 entraîne en rotation un planétaire 2. Celui-ci engrène avec des satellites, préférentiellement au nombre de trois repères 31, 32 et 33. Le porte-satellites est constitué par deux flasques 4 et 60.

Une couronne 6 complète le train épicycloïdal. Elle est attachée à une cloche 63 qui entraîne en rotation l'arbre 8 de sortie du dispositif.

Le flasque 60 du porte-satellites, qui peut être réalisé en tôle emboutie, est en forme de cloche et porte un disque 61 d'embrayage et un disque 62 de frein s'étendant radialement de part et d'autre d'une paroi extérieure 83. A ces disques 61 et 62 sont attachées respectivement deux garnitures de friction 84 et 85 respectivement de l'embrayage et du frein. Chacune de ces garnitures 84 et 85 sera avantageusement choisie double ou biface. Le disque 62 du frein est donc dissocié du disque 61 de l'embrayage. La garniture 85 biface du frein coopère avec un plateau 78 et un contre-plateau 79 immobilisés en rotation par des liaisons adéquates au moyeu 72 solidaire du carter du dispositif.

Un vérin hydraulique constitué par une chambre annulaire 77 dans ce carter et un piston annulaire 74 complète le dispositif ainsi que des joints 75 et 76. L'anneau 80 d'arrêt du contre-plateau 79 et les ressorts d'écartement 81 complètent le frein.

La cloche 63 contient le vérin de l'embrayage, constitué par un piston annulaire 64 avec des joints d'étanchéité 65 et 66, une chambre annulaire 67, des plateau 68 et contre-plateau 69, un anneau d'arrêt 70 et des ressorts d'écartement 71.

Un roulement à aiguilles 82 logé dans le moyeu 72 permet de centrer l'arbre 1. Le positionnement du porte-satellites est assuré par des bagues 22 et éventuellement 23 placées respectivement sur l'arbre 1 et dans l'arbre 8.

Dans un quatrième mode de réalisation de l'invention, le disque portant la garniture du frein est positionné différemment. De manière à réduire la traînée du frein lorsqu'il n'est pas serré, ce qui est le cas sur un véhicule qui roule en marche avant, le rayon moyen de ce disque est réduit.

En vu de réduire le plus possible les encombrements axial et diamétral du dispositif, le vérin de l'embrayage est placé autour du train épicycloïdal.

REVENDICATIONS

1. Dispositif automatisable de démarrage en marche avant et en marche arrière, notamment pour véhicule automobile à moteur thermique, caractérisé en ce qu'il comporte un train épicycloïdal simple à trois satellites associé à un embrayage et à un frein afin de donner des dissipations d'énergie réduites lors des démarrages en marche arrière.

2. Dispositif automatisable de démarrage selon la revendication 1, caractérisé en ce que les disques de l'embrayage et du frein sont solidarisés en rotation de l'un des flasques du porte-satellites.

3. Dispositif automatisable de démarrage selon l'une des revendications 1 et 2, caractérisé en ce que l'embrayage et le frein comportent l'un et l'autre un seul disque avec deux garnitures de friction.

4. Dispositif automatisable de démarrage selon l'une des revendications 2 et 3, caractérisé en ce que le flasque du porte-satellites, qui porte les disques de l'embrayage et du frein, est une cloche en tôle emboutie et découpée qui, par des encoches situées sur sa périphérie, assure une liaison en rotation avec lesdits disques.

5. Dispositif automatisable de démarrage selon la revendication 2, caractérisé en ce que le vérin de l'embrayage est solidaire en rotation de l'arbre d'entrée (1).

6. Dispositif automatisable de démarrage selon les revendications 4 et 5, caractérisé en ce que le disque de l'embrayage et le disque du frein font un seul et même disque (9).

- 12 -

0125977

7. Dispositif automatisable de démarrage selon la revendication 6, caractérisé en ce que la cloche (4), qui porte le disque unique, comporte un déformé annulaire (34) faisant office de collecteur d'huile lors de la rotation, qui coopère avec des orifices radiaux (35) amenant l'huile vers les garnitures de friction (10) et (11) portées par ledit disque (9).

8. Dispositif automatisable de démarrage selon la revendication 6, caractérisé en ce que les vérins de l'embrayage et du frein sont situés de part et d'autre du plan du disque (9) portant les garnitures (10) et (11) de friction dans un sens opposé par rapport à la direction axiale, de telle manière que les contre-plateaux (13) et (18) des pistons du frein et de l'embrayage soient positionnés axialement par construction pour centrer le disque (9) au milieu des plateaux de l'élément non serré.

9. Dispositif automatisable de démarrage selon la revendication 2, caractérisé en ce que le vérin de l'embrayage est solidaire en rotation de l'arbre de sortie (8).

10. Dispositif automatisable de démarrage selon les revendications 4 et 9, caractérisé en ce que le disque de l'embrayage et le disque du frein font un seul et même disque (9).

11. Dispositif automatisable de démarrage selon la revendication 10, caractérisé en ce que les vérins de l'embrayage et du frein sont situés dans un sens opposé par rapport à la direction axiale, de telle manière que les contre-plateaux (95) et (53) des pistons du frein et de l'embrayage soient positionnés axialement par construction pour centrer le disque (9) au milieu des plateaux de l'élément non serré.

12. Dispositif automatisable de démarrage selon les revendications 4 et 9, caractérisé en ce que le disque du frein est dissocié du disque de l'embrayage.

13. Dispositif automatisable de démarrage selon la revendication 12, caractérisé en ce que les vérins de l'embrayage et du frein sont situés du même côté des plans des disques dans le même sens par rapport à la direction axiale.

14. Dispositif automatisable de démarrage selon les revendications 4 et 9, caractérisé en ce que le disque (62) du frein est dissocié du disque (61) de l'embrayage et situé à l'intérieur de la paroi extérieure (83) en forme de cloche du flasque (60).

15. Dispositif automatisable de démarrage selon la revendication 14, caractérisé en ce que les plateaux (78) du frein sont portés par un moyeu (72) faisant partie intégrante du carter, ledit moyeu (72) comportant un roulement à aiguilles (82) portant l'arbre d'entrée (1).

16. Dispositif automatisable de démarrage selon la revendication 3, caractérisé en ce que des ressorts sont interposés entre les plateau  et contre-plateau de l'embrayage.

17. Dispositif automatisable de démarrage selon la revendication 3, caractérisé en ce que des ressorts sont interposés entre les plateau et contre-plateau du frein.

**FIG.1**

0125977

FIG. 2

FIG.3

Office européen
des brevets

**RAPPORT DE RECHERCHE EUROPEENNE**

EP  84 40 0896

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| P,X | GB-A-2 115 090  (SPERRY CORP.)<br>* Page 1, lignes 69-83; figure 2 * | 1-3 | F 16 H   3/60 |
| A | | 5,6,8 | |
| | --- | | |
| X | US-A-3 563 114  (E.R. CASALE)<br>* Colonne  6, ligne 75 - colonne 7, ligne 11; figure 2 * | 1-3 | |
| A | | 5 | |
| | --- | | |
| A | US-A-2 174 672  (ZAHNRADFABRIK FRIEDRICHSHAFEN)<br>* En entier * | 1,3 | |
| | --- | | **DOMAINES TECHNIQUES RECHERCHES (Int. Cl. ³)** |
| A | US-A-3 728 913  (NAGASAKI)<br><br>* Colonne 2, lignes 2-7; figure 1 * | 1-3,9,<br>11 | F 16 H<br>B 63 H<br>F 16 D<br>B 60 K |
| | --- | | |
| A | FR-A-1 530 227  (SELF-CHANGING GEARS LTD.)<br>* Figures * | 1 | |
| | --- | | |
| A | US-A-3 131 582  (D.W. KERBEL)<br>* Figure 1 * | 1,9,16 | |
| | ---              -/- | | |

Le présent rapport de recherche a été établi pour toutes les revendications

| Lieu de la recherche<br>LA HAYE | Date d'achèvement de la recherche<br>08-08-1984 | Examinateur<br>MENDE H. |
|---|---|---|

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

& : membre de la même famille, document correspondant

OEB Form 1503. 03 82

## DOCUMENTS CONSIDERES COMME PERTINENTS

Page  2

| Catégorie | Citation du document avec indication, en cas de besoin, des parties pertinentes | Revendication concernée | CLASSEMENT DE LA DEMANDE (Int. Cl. ³) |
|---|---|---|---|
| A | FR-A-2 325 851  (RENAULT) <br> * En entier * | 1,2,4 | |
| | --- | | |
| A | DE-A-1 450 784  (OTTENSCHLÄGER) | | |
| | ----- | | |

**DOMAINES TECHNIQUES RECHERCHES (Int. Cl. ³)**

Le présent rapport de recherche a été établi pour toutes les revendications

| Lieu de la recherche | Date d'achèvement de la recherche | Examinateur |
|---|---|---|
| LA HAYE | 08-08-1984 | MENDE H. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82